# EUROPÄISCHE PATENTSCHRIFT

(11) **EP 3 004 772 B1**
(45) Veröffentlichungstag und Bekanntmachung des Hinweises auf die Patenterteilung: **01.03.2017**
(21) Anmeldenummer: 14709337.1
(22) Anmeldetag: 12.03.2014
(51) Int. Cl.: F28D 9/00, F02M 26/00, F28D 21/00

(54) **ABGASKÜHLER**
EXHAUST GAS COOLER
REFROIDISSEUR DE GAZ D'ÉCHAPPEMENT

(30) Priorität: 25.03.2013 DE 102013205242
(43) Veröffentlichungstag der Anmeldung: 13.04.2016
(73) Patentinhaber: Mahle International GmbH, 70376 Stuttgart (DE)
(72) Erfinder: FETZER, Tobias, 73760 Ostfildern (DE); GRÖZINGER, Steffen, 71665 Vaihingen (DE); KENNTNER, David, Grand Rapids, MI 49503 (US); KERLER, Boris, 70192 Stuttgart (DE); MEISER, Alexander, 70435 Stuttgart (DE); PAARMANN, Martin, 70195 Stuttgart (DE); SEEGER, Thomas, 70771 Leinfelden-Echterdingen (DE); VELTE, Volker, 75443 Ötisheim (DE)
(74) Vertreter: BRP Renaud & Partner mbB Rechtsanwälte Patentanwälte Steuerberater
(86) Internationale Anmeldenummer: PCT/EP2014/054868
(87) Internationale Veröffentlichungsnummer: WO 2014/154489

(56) Entgegenhaltungen:
- WO-A1-2007/031230
- DE-A1-102008 014 375
- DE-A1-102010 028 660

## Beschreibung

Die vorliegende Erfindung betrifft einen Abgaskühler mit in einer Stapelrichtung aufeinander gestapelten Scheibenpaaren gemäß dem Oberbegriff des Anspruchs 1.

Ein Wärmetauscher mit sämtlichen konstruktiven Merkmalen des Oberbegriffs Anspruchs 1 ist z.B aus WO 2007/031230A1 bekannt. Aus der DE 10 2009 012 493 A1 ist ein Abgaskühler mit aufeinander gestapelten Scheibenpaaren bekannt, wobei zwischen zwei Scheiben zumindest eines ersten Scheibenpaares oder mehrerer erster Scheibenpaare ein von Kühlmittel durchströmbarer erster Strömungsraum und zwischen zwei zueinander benachbarten zweiten Scheibenpaaren ein von Abgas durchströmbarer zweiter Strömungsraum gebildet sind. Darüber hinaus sind zudem ein Kühlmitteleinlass und ein Kühlmittelauslass sowie ein Einlass und ein Auslass für das zu kühlende Abgas vorgesehen. Durch den ersten Strömungsraum führt dabei ein erster Strömungspfad, der zumindest bereichsweise durch Ätzen zumindest einer Oberfläche einer Scheibe eines Scheibenpaares gebildet ist. Durch das Ätzen sollen optimierte Strömungspfadgeometrien einfach hergestellt werden können. Nachteilig bei sämtlichen aus dem Stand der Technik bekannten Abgaskühler sind deren vergleichsweise hohen Temperaturspannungen an einer Außenseite, die dort zu hohen Temperaturdehnungen und damit zu einer großen Belastung führen.

Die vorliegende Erfindung beschäftigt sich daher mit dem Problem, für einen Abgaskühler der gattungsgemäßen Art eine verbesserte oder zumindest eine alternative Ausführungsform anzugeben, die sich insbesondere durch geringere Temperaturspannungen auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die vorliegende Erfindung beruht auf dem allgemeinen Gedanken, einen Abgaskühler genau in demjenigen Bereich zusätzlich zu kühlen, in welchem die höchsten Temperaturspannungen zu erwarten sind. Diese Bereiche sind insbesondere in einem umlaufenden Rand des Abgaskühlers zu sehen. Aus diesem Grund sind randseitig von einzelnen Scheibenpaaren, die in gestapelter Weise den Abgaskühler bilden, mehrere Kühlmitteleinlässe und mehrere Kühlmittelauslässe angeordnet und ermöglichen dadurch eine umlaufende randseitige Kühlung des Abgaskühlers sowie eine Spannungsreduzierung in diesem Bereich. Durch die Spannungsreduzierung kann die auf den Abgaskühler einwirkende Belastung reduziert und damit dessen Lebensdauer erhöht werden. Die einzelnen Scheibenpaare sind dabei in einer Stapelrichtung aufeinander gestapelt, wobei zwischen zwei Scheiben zumindest eines ersten Scheibenpaares oder mehrerer erster Scheibenpaare ein von Kühlmittel durchströmbarer erster Strömungsraum und zwischen zwei zueinander benachbarten zweiten Scheibenpaaren ein von Abgas durchströmbarer zweiter Strömungsraum gebildet ist. Des Weiteren weist der Abgaskühler selbstverständlich einen Einlass sowie einen Auslass für das zu kühlende Abgas auf. Durch das erfindungsgemäße Vorsehen der Kühlmitteleinlässe bzw. Kühlmittelauslässe am Rand eines jeweiligen Scheibenpaares können insbesondere hohe Temperaturdifferenzen innerhalb des Abgaskühlers kompensiert und dadurch die Spannungsbelastung für den Abgaskühler gemindert werden.

Zweckmäßig weisen die einzelnen Scheiben die Form zweier Kreisbögen mit diesen verbindenden Geraden auf. Eine derartige Form findet sich beispielsweise auch bei einer Aschebahn in einem Stadion wieder und stellt die für Abgaskühler übliche Form dar. Bei einem derartigen langgestreckten Oval werden insbesondere Ecken vermieden, die zu Spannungsspitzen und damit zu Belastungsspitzen führen können.

Bei der der erfindungsgemäßen Lösung sind ein Abgaseinlass sowie ein Abgasauslass halbkreisförmig in den Kreisbögen der Scheiben angeordnet und zusätzlich von Kühlmitteleinlässen bzw. Kühlmittelauslässen umgeben. Hierdurch kann auch im Bereich des Abgaseinlasses und des Abgasauslasses eine randseitige Kühlung der Scheiben des Abgaskühlers erzielt und in diesem Bereich die dort auftretenden Temperaturspannungen reduziert werden.

Die Kühlmitteleinlässe weisen ebenso wie die Kühlmittelauslässe einen flachrohrartigen Querschnitt mit abgerundeten Ecken auf, wodurch eine eng am Rand der jeweiligen Scheiben anliegende Anordnung ermöglicht wird. Dabei ist denkbar, dass auf der einen Hälfte einer jeweiligen Scheibe die flachrohrartigen Kühlmitteleinlässe und auf der anderen Seite flachrohrartigen Kühlmittelauslässe angeordnet werden. Durch die abgerundeten Ecken können insbesondere spannungskritische spitze Ecken vermieden werden, was sich ebenfalls positiv auf die Belastung des Abgaskühlers auswirkt.

Bei einer weiteren vorteilhaften Ausführungsform der erfindungsgemäßen Lösung sind zwischen zwei benachbarten Scheiben, die zusammen ein Scheibenpaar bilden, Strömungsleitelemente angeordnet. Diese Strömungsleitelemente sollen den Wärmetausch verbessern und insbesondere das durchströmende Kühlmittel bzw. Abgas verwirbeln, was ebenfalls den Wärmetausch unterstützt. Dabei können zwischen unterschiedlichen Scheibenpaaren eine unterschiedliche Anzahl an Strömungsleitelementen angeordnet sein und zwar mit zunehmendem Abstand von einem Abgaseinlassstutzen des Abgaskühlers immer weniger. Hierdurch kann eine Homogenisierung des Durchströmungsverhaltens erzielt werden, da nahe am Abgaseinlassstutzen ein vergleichsweise hoher Abgasdruck herrscht, der mit zunehmender Entfernung nachlässt. Mit zunehmender Entfernung sinkt auch die Anzahl der zwischen den einzelnen Scheibenpaaren angeordneten Strömungsleitelementen, wodurch der Strömungswiderstand reduziert wird. Im günstigsten Fall können dabei im gesamten Abgaskühler homogene Strömungsverhältnisse erreicht werden.

Zweckmäßig sind in den Eckbereichen des halbkreisförmigen Abgaseinlasses und des Abgasauslasses Fasen angeordnet. Derartige Fasen verbessern ein Einström- bzw. ein Ausströmverhalten und reduzieren dadurch den Strömungswiderstand innerhalb des Abgaskühlers sowohl im Bereich des Abgases als auch im Bereich des Kühlmittels. Ebenfalls das Strömungsverhalten günstig beeinflussen kann eine Nase an einer Geraden des halbkreisförmigen Abgaseinlasses bzw. Abgasauslasses, so dass auch diese zur verbesserten Strömungsführung herangezogen werden kann.

### Weitere Vorteile können hier durch die Erfinder genannt werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Schnittdarstellung durch einen erfindungsgemäßen Abgaskühler mit zwei Detaildarstellungen,
- Fig. 2: eine Ansicht von oben auf eine Scheibe des erfindungsgemäßen Abgaskühlers,
- Fig. 3: teilweise geschnittene Scheiben eines derartigen Abgaskühlers.

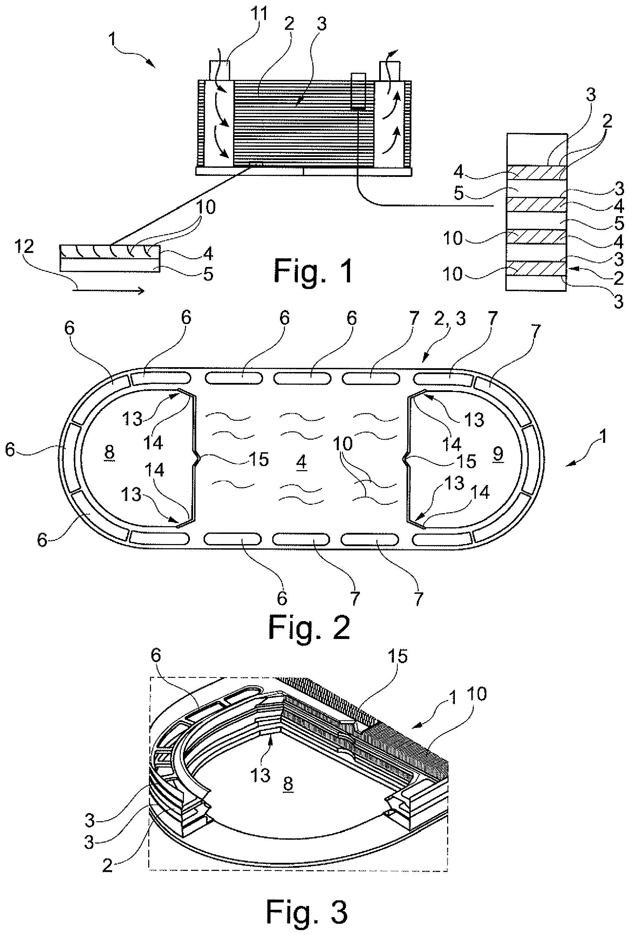

Entsprechend der Figur 1, weist ein erfindungsgemäßer Abgaskühler 1 aufeinander gestapelte Scheibenpaare 2 auf, wobei zwischen zwei Scheiben 3 zumindest eines ersten Scheibenpaares 2 oder mehrerer erster Scheibenpaare 2 ein von Kühlmittel durchströmbarer erster Strömungsraum 4 und zwischen zwei zueinander benachbarten zweiten Scheibenpaaren 2 ein von Abgas durchströmter zweiter Strömungsraum 5 gebildet sind. Ebenfalls vorgesehen sind ein Kühlmitteleinlass 6 sowie ein Kühlmittelauslass 7 sowie ein Abgaseinlass 8 und ein Abgasauslass 9 (vergleiche die Figuren 2 und 3). Erfindungswesentlich ist dabei nun, dass jedes erste Scheibenpaar 2 mehrere Kühlmitteleinlässe 6 sowie mehrere Kühlmittelauslässe 7 aufweist, die randseitig des jeweiligen Scheibenpaares 2 angeordnet sind und dadurch eine umlaufende randseitige Kühlung des Abgaskühlers 1, verbunden mit der damit einhergehenden Spannungsreduzierung, ermöglichen. Die Kühlmitteleinlässe 6 sowie die Kühlmittelauslässe 7 sind dabei besonders deutlich in den Darstellungen gemäß den Figuren 2 und 3 zu sehen.

Die einzelnen Scheiben 3 besitzen dabei die Form zweier Kreisbögen mit diese verbindenden Geraden, wie dies gemäß der Figur 2 deutlich zu erkennen ist. Der Abgaseinlass 8 sowie der Abgasauslass 9 sind dabei in den jeweiligen Kreisbögen angeordnet. Die Kühlmitteleinlässe 6 sind dabei den Abgaseinlass 8 umgebend angeordnet, wogegen die Kühlmittelauslässe 7 den Abgasauslass 9 umgebend angeordnet sind. Denkbar ist selbstverständlich auch eine umgekehrte Anordnung, das heißt die Kühlmitteleinlässe 6 sind den Abgasauslass 9 umgebend angeordnet, während die Kühlmittelauslässe 7 den Abgaseinlass 8 umgebend angeordnet sind. Betrachtet man die Figur 2, so kann man erkennen, dass die Kühlmitteleinlässe 6 und die Kühlmittelauslässe 7 einen flachrohrartigen Querschnitt mit abgerundeten Ecken aufweisen, was insbesondere spannungstechnisch günstig ist, da scharfe Ecken und Kanten stets Spannungsspitzen hervorrufen können.

Betrachtet man die Figur 1, so kann man erkennen, dass zwischen unterschiedlichen Scheiben 3 eine unterschiedliche Anzahl an Strömungsleitelementen 10 angeordnet ist, und zwar mit zunehmendem Abstand zu einem Abgaseinlassstutzen 11 des Abgaskühlers 1 immer weniger. Dies bedeutet, dass in den oberen Scheibenpaaren 2 des Abgaskühlers 1 mehr Strömungsleitelemente 10 angeordnet sind und nach unten immer weniger. Hierdurch kann eine homogene Druckverteilung bzw. ein homogenes Strömungsverhalten innerhalb des Abgaskühlers 1 erzwungen werden, da auch der Druck des einströmenden Abgases mit Abstand zum Abgaseinlassstutzen 11 abnimmt. In gleicher Weise kann auch eine Anzahl der Strömungsleitelemente 10 zwischen zwei Scheiben 3 in Durchströmungsrichtung 12 zunehmen, wie dies ebenfalls einer Detaildarstellung der Figur 1 zu entnehmen ist. Die Strömungsleitelemente 10 sind dabei ausschließlich im ersten Strömungsraum 4 eingezeichnet, wobei es selbstverständlich auch denkbar ist, dass derartige Strömungsleitelemente 10 im zweiten Strömungsraum 5 angeordnet sind.

Um ein Strömungsverhalten innerhalb des Strömungsraumes 4 und insbesondere ein Ein- bzw. Ausströmen des Kühlmittels strömungstechnisch zu verbessern, sind in Eckbereichen 13 des halbkreisförmigen Abgaseinlasses 8 bzw. des Abgasauslasses 9 Fasen 14 angeordnet. Ebenfalls strömungstechnisch günstig wirken Nasen 15, die an der Geraden des halbkreisförmigen Abgaseinlasses 8 bzw. des Abgasauslasses 9 angeordnet sind.

Die Strömungsleitelemente 10 können dabei gemäß der in Figur 1 dargestellten Form ausgeführt sein, wobei selbstverständlich auch jegliche andere Formen denkbar sind, die das strömende Fluid, das heißt also beispielsweise das Abgas oder das Kühlmittel, verwirbeln und dadurch die Wärmeübertragung verbessern. Von besonderem Vorteil bei dem erfindungsgemäßen Abgaskühler 1 ist, dass durch die randseitig angeordneten Kühlmitteleinlässe 6 sowie die randseitig angeordneten Kühlmittelauslässe 7 Temperatur- und damit Spannungsspitzen im Randbereich der Scheiben 3 verhindert werden, was sich positiv auf die Lebensdauer des Abgaskühlers 1 auswirkt.

## Patentansprüche

1. Abgaskühler (1) mit aufeinandergestapelten Scheibenpaaren (2), wobei zwischen zwei Scheiben (3) zumindest eines ersten Scheibenpaares (2) oder mehrerer erster Scheibenpaare (2) ein von Kühlmittel durchströmbarer erster Strömungsraum (4) und zwischen zwei zueinander benachbarten zweiten Scheibenpaaren (2) ein von Abgas durchströmbarer zweiter Strömungsraum (5) gebildet sind, mit zumindest einem Kühlmitteleinlass (6) und einem Kühlmittelauslass (7), wobei
- jedes erste Scheibenpaar (2) mehrere Kühlmitteleinlässe (6) und mehrere Kühlmittelauslässe (7) aufweist, die randseitig des jeweiligen Scheibenpaares (2) angeordnet sind,
- die einzelnen Scheiben (3) in Form von zweien Kreisbögen mit diesen verbindenden Geraden ausgebildet sind,
- ein Abgaseinlass (8) und ein Abgasauslass (9) halbkreisförmig in den Kreisbögen angeordnet sind,
- die Kühlmitteleinlässe (6) oder die Kühlmittelauslässe (7) den Abgaseinlass (8) oder den Abgasauslass (9) umgebend angeordnet sind,
**dadurch gekennzeichnet,**
- **dass** jedes erste Scheibenpaar (2) im Bereich der Geraden jeweils eine randseitige Reihe von solchen Kühlmitteleinlässen (6) und Kühlmittelauslässen (7) aufweist,
- **dass** die Reihen parallel und entlang der Geraden verlaufen,
- **dass** die Kühmitteleinlässe (6) und die Kühlmittelauslässe (7) der Reihen einen flachrohrartigen Querschnitt mit abgerundeten Ecken aufweisen und die Querschnitte mit ihrer Längserstreckung entlang der zugehörigen Reihe verlaufen,
- **dass** die Kühmitteleinlässe (6) und die Kühlmittelauslässe (7) entlang der zugehörigen Reihe beabstandet sind,
- **dass** Kühmitteleinlässe (6) und die Kühlmittelauslässe (7) dadurch eine umlaufende randseitige Kühlung des Abgaskühlers (1) ermöglichen.

2. Abgaskühler nach Anspruch 1,
**dadurch gekennzeichnet,**
**dass** zwischen zwei benachbarten Scheiben (3), das heißt im ersten Strömungsraum (4) und/oder im zweiten Strömungsraum (5) Strömungsleitelemente (10) angeordnet sind.

3. Abgaskühler nach Anspruch 2,
**dadurch gekennzeichnet,**
**dass** in unterschiedlichen ersten Strömungsräumen (4) und/oder in unterschiedlichen zweiten Strömungsräumen (5) zwischen unterschiedlichen Scheiben (3) eine unterschiedliche Anzahl an Strömungsleitelementen (10) angeordnet ist und zwar mit zunehmendem Abstand zu einem Abgaseinlassstutzen (11) des Abgaskühlers (1) immer weniger.

4. Abgaskühler nach Anspruch 2 oder 3,
**dadurch gekennzeichnet,**
**dass** eine Anzahl an Strömungsleitelemente (10) im ersten oder zweiten Strömungsraum (4,5) in Durchströmungsrichtung (12) zunimmt.

5. Abgaskühler nach einem der Ansprüche 1 bis 4,
**dadurch gekennzeichnet,**
**dass** in Eckbereichen (13) des halbkreisförmigen Abgaseinlasses (8) und des Abgasauslasses (9) Fasen (14) angeordnet sind.

6. Abgaskühler nach einem der Ansprüche 1 bis 5,
**dadurch gekennzeichnet,**
**dass** an der Geraden des halbkreisförmigen Abgaseinlasses (8) und des Abgasauslasses (9) eine Nase (15) zur Strömungsleitung angeordnet ist.

## Claims

1. Exhaust gas cooler (1) comprising pairs of discs (2) stacked on top of one another, wherein between two discs (3) of at least one first disc pair (2) or a plurality of first disc pairs (2) a first flow chamber (4) flowed through by coolant is formed and between two adjacent second disc pairs (2) a second flow chamber (5) flowed through by exhaust gas is formed, with at least one coolant inlet (6) and one coolant outlet (7), wherein
- each first disc pair (2) comprises a plurality of coolant inlets (6) and a plurality of coolant outlets (7) which are arranged at the edge of the respective disc pair (2),
- the individual discs (3) are designed in the form of two circular arcs with linear edges connecting the latter,
- an exhaust gas inlet (8) and an exhaust gas outlet (9) are arranged in semi-circular form in the circular arcs,
- the coolant inlets (6) or the coolant outlets (7) are arranged surrounding the exhaust gas inlet (8) or the exhaust gas outlet (9),
**characterised in that**
- each first disc pair (2) in the region of the linear edges respectively has an edge-side row of such coolant inlets (6) and coolant outlets (7),
- the rows run in parallel and along the straight parts,
- the coolant inlets (6) and the coolant outlets (7) of the rows have a flat tubular cross-section with rounded corners and the cross-sections run in their longitudinal extension along the associated row,
- the coolant inlets (6) and the coolant outlets (7) are spaced apart along the associated row,
- the coolant inlets (6) and the coolant outlets (7) thereby enable a peripheral edge-side cooling of the exhaust gas cooler (1).

2. Exhaust gas cooler according to claim 1, **characterised in that** flow directing elements (10) are arranged between two adjacent discs (3), that is in the first flow chamber (4) and/or in the second flow chamber (5).

3. Exhaust gas cooler according to claim 2, **characterised in that** in different first flow chambers (4) and/or in different second flow chambers (5) between different discs (3) there is a different number of flow directing elements (10) and there are fewer with increasing distance from an exhaust inlet point (11) of the exhaust gas cooler (1).

4. Exhaust gas cooler according to claim 2 or 3, **characterised in that** the number of flow-directing elements (10) in the first or second flow chamber (4, 5) increases in through-flow direction (12).

5. Exhaust gas cooler according to any one of claims 1 to 4, **characterised in that** chamfering (14) is provided at the corners (13) of the semi-circular exhaust inlet (8) and the exhaust outlet (9).

6. Exhaust gas cooler according to any one of claims 1 to 5, **characterised in that** on the linear edges of the semi-circular exhaust inlet (8) and the exhaust outlet (9) a nose (15) is arranged for directing the flow.

## Revendications

1. Refroidisseur de gaz d'échappement (1) avec des paires de plaques (2) empilées les unes sur les autres, dans lequel un premier espace d'écoulement (4) pouvant être traversé par un flux de liquide de refroidissement est formé entre deux plaques (3) au moins d'une première paire de plaques (2) ou de plusieurs premières paires de plaques (2) et un deuxième espace d'écoulement (5) pouvant être traversé par un flux de gaz d'échappement est formé entre deux deuxièmes paires de plaques (2) adjacentes l'une par rapport à l'autre, avec au moins une entrée de liquide de refroidissement (6) et une sortie de liquide de refroidissement (7), dans lequel
- chaque première paire de plaques (2) présente plusieurs entrées de liquide de refroidissement (6) et plusieurs sorties de liquide de refroidissement (7), qui sont disposées côté bord de la paire de plaques (2) respective,
- les diverses plaques (3) sont réalisées sous la forme de deux arcs de cercle avec lesdites droites de liaison,
- une entrée de gaz d'échappement (8) et une sortie de gaz d'échappement (9) sont disposées dans les arcs de cercle de manière à présenter une forme de demi-cercle,
- les entrées de liquide de refroidissement (6) ou les sorties de liquide de refroidissement (7) sont disposées de manière à entourer l'entrée de gaz d'échappement (8) ou la sortie de gaz d'échappement (9),
**caractérisé en ce**
- **que** chaque première paire de plaques (2) présente, dans la zone des droites, respectivement une rangée située côté bord d'entrées de liquide de refroidissement (6) et de sorties de liquide de refroidissement (7) de ce type,
- **que** les rangées s'étendent de manière parallèle et le long des droites,
- **que** les entrées de liquide de refroidissement (6) et les sorties de liquide refroidissement (7) des rangées présentent une section transversale à la manière d'un tuyau plat, avec des angles arrondis, et les sections transversales s'étendent par leur extension longitudinale le long de la rangée associée,
- **que** les entrées de liquide de refroidissement (6) et les sorties de liquide de refroidissement (7) sont espacées le long de la rangée associée,
- **que** des entrées de liquide de refroidissement (6) et les sorties de liquide de refroidissement (7) permettent ainsi un refroidissement périphérique côté bord du refroidisseur de gaz d'échappement (1).

2. Refroidisseur de gaz d'échappement selon la revendication 1,
**caractérisé en ce**
**que** des éléments conducteurs d'écoulement (10) sont disposés entre deux plaques (3) adjacentes, c'est-à-dire dans le premier espace d'écoulement (4) et/ou dans le deuxième espace d'écoulement (5).

3. Refroidisseur de gaz d'échappement selon la revendication 2,
**caractérisé en ce**
**qu'**un nombre différent d'éléments conducteurs d'écoulement (10) est disposé dans des premiers espaces d'écoulement (4) différents et/ou dans des deuxièmes espaces d'écoulement (5) différents entre des plaques (3) différentes, et ce de moins en moins avec une distance croissante par rapport à une tubulure d'entrée de gaz d'échappement (11) du refroidisseur de gaz d'échappement (1).

4. Refroidisseur de gaz d'échappement selon la revendication 2 ou 3,
**caractérisé en ce**
**qu'**un nombre d'éléments conducteurs d'écoulement (10) dans le premier ou dans le deuxième espace d'écoulement (4, 5) augmente dans la direction de passage d'écoulement (12).

5. Refroidisseur de gaz d'échappement selon l'une quelconque des revendications 1 à 4,
**caractérisé en ce**
**que** des chanfreins (14) sont disposés dans des zones d'angle (13) de l'entrée de gaz d'échappement (8) en forme de demi-cercle et de la sortie de gaz d'échappement (9).

6. Refroidisseur de gaz d'échappement selon l'une quelconque des revendications 1 à 5,
**caractérisé en ce**
**qu'**un ergot (15) servant à conduire l'écoulement est disposé au niveau de la droite de l'entrée de gaz d'échappement (8) en forme de demi-cercle et de la sortie de gaz d'échappement (9).
